# EUROPÄISCHE PATENTANMELDUNG

(11) **EP 1 133 133 A2**
(43) Veröffentlichungstag der Anmeldung: **12.09.2001**
(21) Anmeldenummer: 01104138.1
(22) Anmeldetag: 21.02.2001
(51) Int. Cl.: H04L 29/12

(54) **Verfahren und Anordnungen zur Adressierung von Kommunikationseinrichtungen**

(30) Priorität: 06.03.2000 DE 10010949
(71) Anmelder: SIEMENS AKTIENGESELLSCHAFT, 80333 München (DE)
(72) Erfinder: Erasmy, François, 2526 Luxemburg (LU); Jedlitschka, Robert, 80686 München (DE)

(57) **Zusammenfassung**

Zur Adressierung einer Kommunikationseinrichtung KE eines Kommunikationsnetzes KN, in dem die zugeordneten Kommunikationseinrichtungen KE mit ein erstes Format F₁ aufweisenden Netzadressen A_{OSI} adressiert werden, wird eine ein von dem ersten Format F₁ unterschiedliches zweites Format F₂ aufweisende Netzadresse A_{IP1} festgelegt, unter Berücksichtigung dieser Netzadresse A_{IP1} eine an das erste Format F₁ angepasste Netzadresse A_{OSI} gebildet, und der Kommunikationseinrichtung KE die angepasste Netzadresse A_{OSI} zu deren Adressierung in dem Kommunikationsnetz KN zugeordnet.

## Beschreibung

Für eine gezielte Übermittlung von Informationen zwischen durch Kommunikationsnetze miteinander verbundenen Kommunikationseinrichtungen ist eine eindeutige Adressierung der Kommunikationseinrichtungen erforderlich. Üblicherweise wird hierzu jeder Kommunikationseinrichtung in jedem Kommunikationsnetz, dem sie zugeordnet ist, eine eindeutige Netzadresse zugeordnet. Ein derartiger Verbund von einem bestimmten Kommunikationsnetz zugeordneten Kommunikationseinrichtungen wird in der Fachwelt auch als 'Domäne' oder 'Region' bezeichnet.

Die Anzahl der einer Domäne zugeordneten Kommunikationseinrichtungen wird üblicherweise begrenzt. Folglich finden sich in zeitgemäßen Netzstrukturen viele Domänen, die untereinander durch Netzübergangseinrichtungen verbunden sind. Netzübergangseinrichtungen sind spezielle Kommunikationseinrichtungen, die gleichzeitig zumindest zwei Domänen zugeordnet sind und in jeder eine für die jeweilige Domäne eindeutige Netzadresse aufweisen. Sie werden auch 'Gateway' bzw. 'Router' genannt.

Überlicherweise kommen in unterschiedlichen Kommunikationsnetzen unterschiedliche Vorschriften zur Übermittlung von Informationen zum Einsatz. Diese Vorschriften werden auch 'Protokolle' genannt. Sie werden z.B. zur Steuerung von bei der Informationsübermittlung zum Einsatz kommenden Adressierungs-, Übertragungs-, Vermittlungs-, Authentifizierungs- oder Priorisierungsverfahren eingesetzt. Entsprechend dem von der ISO (International Organization for Standardization) vorgeschlagenen OSI (Open Systems Interconnection)-Referenzmodell werden Protokolle jeweils einer von mehreren Protokollschichten zugeordnet. Insgesamt sind sieben Schichten vorgesehen, wobei in den unteren vier Schichten die Übermittlung in Kommunikationsnetzen geregelt wird. Der Schicht 1-auch 'Physical Layer' genannt - ist hierbei die punkt-zu-punkt Übertragung zwischen zwei Leitungsendeinrichtungen über physikalische Leiter wie z.B. Kupferkabel, Lichtwellenleiter oder Luft zugeordnet; der Schicht 2 - auch 'Control Layer' genannt - die Behandlung von Übertragungsfehlern in der Schicht 1; der Schicht 3 - auch 'Network Layer' genannt - das Routen in einem vermaschten Netz von Vermittlungseinrichtungen; und der Schicht 4 - auch 'Transport Layer' genannt - die Behandlung von Fehlern in den darunterliegenden Schichten sowie die Steuerung der gezielten Informationsübermittlung zwischen zwei Kommunikationsendeinrichtungen. Von der OSI sind für jede der Schichten Protokolle vorgeschlagen, die im weiteren auch 'OSI-Protokolle' genannt werden.

In jeder einem Kommunikationsnetz zugeordneten Kommunikationseinrichtung ist zumindest ein Schicht 1 Protokoll sowie üblicherweise zumindest ein Schicht 2 Protokoll vorgesehen, wobei die Dienste des Schicht 1 Protokolls von dem Schicht 2 Protokoll genutzt werden. Kommunikationseinrichtungen, in denen lediglich Protokolle bis zu Schicht 2 vorgesehen sind, werden je nach ihrer Funktion beispielsweise 'Bridges', 'Hub', 'Layer-2-Switch' oder 'Converter' genannt, als Netzübergangseinrichtungen ausgebildete Kommunikationseinrichtungen mit Protokollen bis Schicht 4 beispielsweise 'Gateway', 'Layer-3/4-Switch' oder 'Router'. In jeder dieser Kommunikationseinrichtungen sind somit eine Vielzahl von Protokollen vorgesehen, die entsprechend dem OSI-Referenzmodell geschichtet sind. Eine derartige Schichtung von Protokollen wird auch als 'Protokollstack' bezeichnet.

Infolge der dargestellten Strukturierung von Kommunikationsnetzen gestaltet sich die Ermittlung eindeutiger Netzadressen für z.B. Gateways zwischen Domänen mit unterschiedlichen Layer-3-Protokollen als eine komplexe Aufgabe des Netzmanagements.

Üblicherweise ist hierbei für jede Domäne ein separater Adressplan vorgesehen. Nach Maßgabe dieses domänenspezifischen Adressplans wird für jede Kommunikationseinrichtung einer Domäne i.A. eine entsprechend den Vorschriften des in der Domäne zur Anwendung kommenden Layer-3-Protokolls formatierte Netzadresse ermittelt und dieser zugeordnet.

Es ist eine Aufgabe der Erfindung, die Ermittlung und Zuordnung von Netzadressen zu verbessern. Die Aufgabe wird durch die Merkmale des Patentanspruchs 1 gelöst.

Der wesentliche Aspekt der Erfindung besteht in einem Verfahren zur Zuordnung einer Netzadresse zu einer Kommunikationseinrichtung in einem Kommunikationsnetz, in dem die zugeordneten Kommunikationseinrichtungen mit ein erstes Format aufweisenden Netzadressen adressiert werden, bei dem eine ein von dem ersten Format unterschiedliches zweites Format aufweisende Netzadresse festgelegt, unter Berücksichtigung dieser Netzadresse eine an das erste Format angepasste Netzadresse gebildet, und der Kommunikationseinrichtung die angepasste Netzadresse zu deren Adressierung in dem Kommunikationsnetz zugeordnet wird.

Einige wesentliche Vorteile der Erfindung seien im folgenden genannt:
- Unabhängig von den Format-Anforderungen einer Domäne, der eine Kommunikationseinrichtung zugeordnet wird, können immer Netzadressen eines einheitlichen Formats festgelegt werden, da lediglich die anpassten Netzadressen den Vorschriften des in der jeweiligen Domäne zur Anwendung kommenden Layer-3-Protokolls genügen muss.
- Die Ermittlung von Netzadressen wird vereinfacht, da und die angepassten Netzadressen zumindest teilweise automatisch festgelegt werden.
- Die Wahrscheinlichkeit von fehlerhaften Netzadressen wird reduziert, da bei fehlerfreier Festlegung der Netzadresse die automatisch angepasste Netzadresse per definitionem fehlerfrei ist.
- Die Verwaltung des Adreßraums der angepassten Netzadressen kann entfallen, wenn die Netzadressen konfliktfrei festgelegt werden.

Gemäß einer Variante des erfindungsgemäßen Verfahrens ist vorgesehen, dass bei einer als Netzübergangseinrichtung zu einem weiteren Kommunikationsnetz, in dem die zugeordneten Kommunikationseinrichtungen mit das zweite Format aufweisenden Netzadressen adressiert werden, ausgebildeten Kommunikationseinrichtung eine weitere, das zweite Format aufweisende Netzadresse festgelegt und der Netzübergangseinrichtung zu deren Adressierung in dem weiteren Kommunikationsnetz zugeordnet wird - Anspruch 2. Somit wird die Ermittlung der Netzadressen vereinfacht, da trotz unterschiedlicher Formate und Adreßräume lediglich Netzadressen eines einzigen Formats sowie eines einheitlichen Adressraums gebildet werden.

Entsprechend einer Ausgestaltung des erfindungsgemäßen Verfahrens ist vorgesehen, dass in dem ersten Kommunikationsnetz entsprechend den Vorschriften eines OSI-Protokolls adressiert wird - Anspruch 5. Insbesondere wird bei Ausbildung des OSI-Protokolls als Connection Less Network Protocol (CLNP) die angepasste Netzadresse gebildet, indem für einen als Authority And Format Identifier (AFI) ausgebildeten Prefix ein hexadezimaler Wert 0x31 vergeben und die festgelegte Netzadresse in einen nachfolgenden Domain Specific Part eingefügt wird-Anspruch 6. Durch Verwendung des private Adressen kennzeichnenden AFI 0x31 werden Adreßkonflikte zwischen den - vorzugsweise automatisch gebildeten - angepassten Netzadressen und den restlichen in dem Adreßraum des Protokolls CLNP vorgesehenen Netzadressen vermieden.

Nach einer Variante des erfindungsgemäßen Verfahrens ist das zweite Format als ein Format zur Bildung von Internet-Adressen ausgebildet - Anspruch 7. Insbesondere wird in dem zweiten Kommunikationsnetz entsprechend den Vorschriften eines IP-Protokolls adressiert - Anspruch 8. Somit können vorteilhaft bewährte Verfahren zu Vermeidung von Adreßkonflikten zwischen den festgelegten Internet-Adressen angewendet werden. In Kombination mit dem private Adressen kennzeichnenden AFI 0x31 des Protokoll CLNP werden somit angepasste Netzadressen gebildet, die inhärent frei von Adreßkonflikten innerhalb des Adreßraums der angepassten Netzadressen sind.

Weitere vorteilhafte Ausgestaltungen der Erfindung ergeben sich aus den unter- oder nebengeordneten Ansprüchen.

Die Erfindung wird im folgenden anhand von Ausführungsbeispielen, die in mehreren Figuren dargestellt sind, näher erläutert. Dabei zeigen
- Figur 1: in einem Blockschaltbild eine schematische Darstellung einer erfindungsgemäßen Kommunikationseinrichtung
- Figur 2: ein Netzadress-Format gemäß dem OSI-Protokoll CLNP
- Figur 3: zwei erfindungsgemäß miteinander verbundene Protokollstacks
- Figur 4: einen Verbund von Kommunikationsnetzen mit zwei als Netzübergangseinrichtungen ausgebildeten Kommunikationseinrichtungen

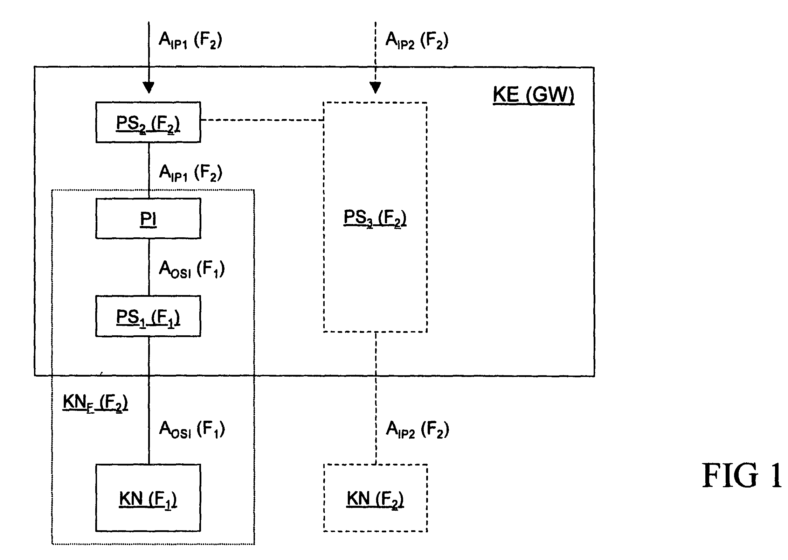

In Figur 1 ist beispielhaft eine erfindungsgemäße Kommunikationseinrichtung KE dargestellt, die zumindest einen ersten Protokollstack PS₁ (F₁) zum Anschluß an ein erstes Kommunikationsnetz KN₁ (F₁) mit Netzadressen A_{OSI} eines ersten Formats F₁ aufweist. Zwischen dem ersten Protokollstack PS₁ und dem Kommunikationsnetz KN₁ werden bei Informationsübermittlung das erste Format F₁ aufweisende Netzadressen A_{OSI} (F₁) übermittelt. Zudem ist zumindest ein zweiter Protokollstack PS₂ (F₂) zum Anschluß an ein fiktives zweites Kommunikationsnetz KN₂ (F₂) mit Netzadressen A_{IP} eines zweiten Formats F₂ vorgesehen. Die beiden Protokollstacks PS werden durch einen Adapter PI miteinander verbunden. Mit dem ersten Protokollstack PS₁ werden von dem Adapter PI das erste Format F₁ aufweisende Netzadressen A_{OSI} ausgetauscht. Gegenüber dem zweiten Protokollstack PS₂ wirkt der Adapter PI als das fiktive Kommunikationsnetz KN₂ (F₂), d.h. es werden u.a. das zweite Format F₂ aufweisende Netzadressen A_{IP} ausgetauscht. Somit wird von dem Adapter PI eine Umsetzung der Netzadressen A zwischen den beiden Formaten F₁ und F₂ bewirkt. Zur Konfiguration der Netzadresse A_{OSI} der Kommunikationeinrichtung KE in dem Kommunikationsnetz KN₁ (F₁) wird lediglich die das zweite Format F₂ aufweisende, dem zweiten Protokollstack PS₂ zugeordnete Netzadresse A_{IP1} festgelegt und mitgeteilt.

Sofern die Kommunikationseinrichtung als Netzübergangseinrichtung GW ausgebildet ist, sei zumindest ein dritter Protokollstack PS₃ (F₂) vorgesehen, der mit einem dritten, Netzadressen A des zweiten Formats F₂ aufweisenden Kommunikationsnetz KN₃ (F₂) verbunden sei. Zur Konfiguration der weiteren Netzadresse A_{IP2} der Netzübergangseinrichtung GW in dem Kommunikationsnetz KN₃ wird eine das zweite Format F₂ aufweisende, dem weiteren zweiten Protokollstack PS₂ zugeordnete weitere Netzadresse A_{IP2} festgelegt und mitgeteilt. Die beiden Protokollstacks PS₂ und PS₃ sind zum Zwecke der Informationsübermittlung zwischen den Kommunikationsnetzen KN₁ (F₁) und KN₃ (F₂) miteinander verbunden.

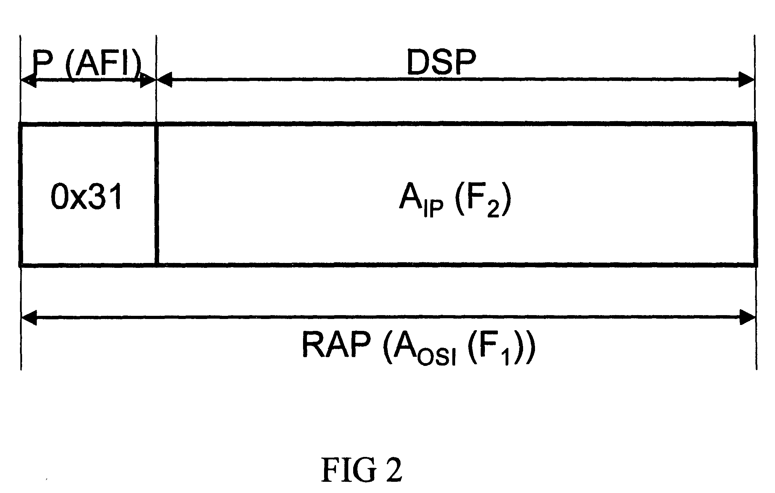

In Figur 2 ist ein Netzadress-Format gemäß dem OSI-Protokoll CLNP dargestellt. Eine derartige Netzadresse weist einen vorzugsweise als Authority and Format Identifier AFI mit Wert 0x31 ausgebildeten Prefix P auf, gefolgt von einem Domain Specific Part DSP, in den erfindungsgemäß das zweite Format F₂ aufweisende Netzadressen A_{IP} (F₂) zur Bildung von das erste Format F₁ aufweisenden Netzadressen A_{OSI} eingefügt werden. Diese wird auch Reachable Address Prefix RAP genannt.

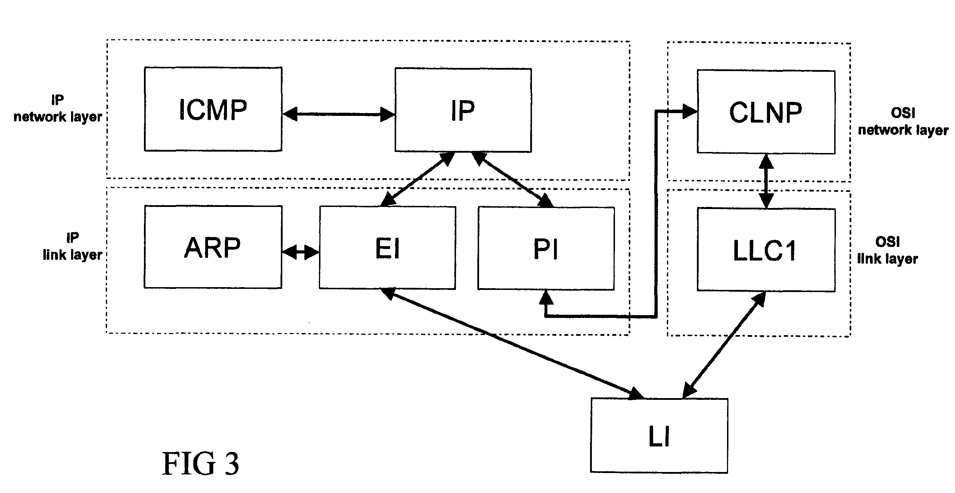

In Figur 3 sind beispielhafte Ausgestaltungen der erfindungsgemäß mit einem Adapter PI miteinander verbundenen Protokollstacks PS₁ und PS₂ dargestellt. Hierbei umfasse der erste Protokollstack PS₁ z.B. die übereinander geschichteten OSI-Protokolle CLNP und LLC1. Dem zweiten Protokollstack PS₂ seien die nebeneinander angeordneten IP-Protokolle IP und ICMP zugeordnet. Der Adapter PI ist zwischen den Protokollen IP und CLNP angeordnet. Ein ggf. vorgesehener dritter Protokollstack PS₃ weise beispielsweise die übereinander geschichteten Protokolle IP und EI auf. Innerhalb ihrer jeweiligen Schicht wird hierbei dem Protokoll IP das Protokoll ICMP und dem Protokoll EI das Protokoll ARP zugeordnet. Alle Protokollsstacks PS greifen auf die physikalische Leitung mit Hilfe des Schicht 1 Protokolls LI zu, d.h. die Zuordnung der Kommunikationseinrichtungen zu Kommunikationsnetzen erfolgt auf logisch abstrakter Ebene (durch analoge Protokollstacks PS) und nicht aus physikalischer Ebene (durch Verkabelung).

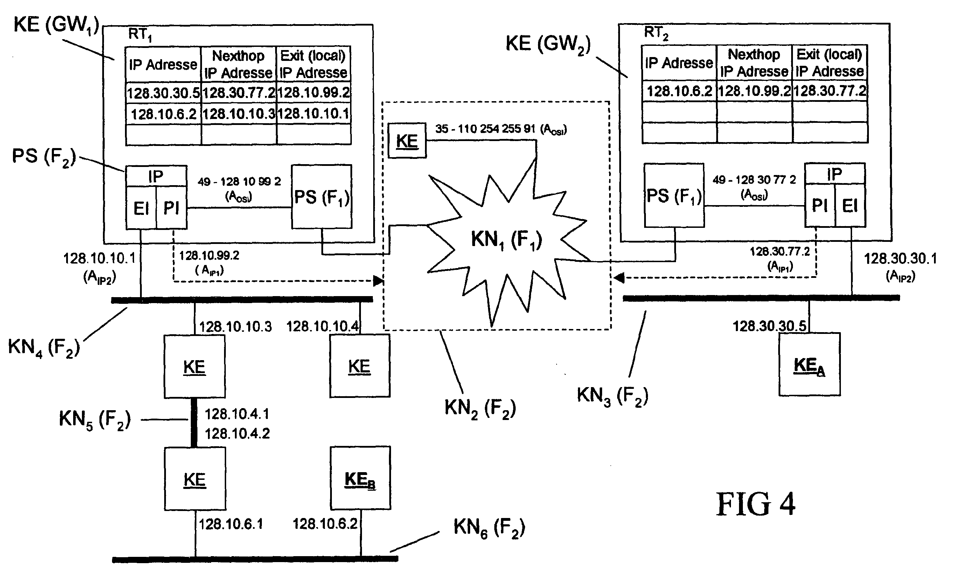

In Figur 4 ist beispielhaft ein Verbund von sechs Kommunikationsnetzen KNᵢ, 1 <= i <= 6 dargestellt, wobei in dem Kommunikationsnetz KN₁ Netzadressen A des ersten Formats F₁ und in den Kommunikationsnetzen KN₂ - KN₆ des zweiten Formats F₂ zur Anwendung kommen. Das zweite Kommunikationsnetz KN₂ ist lediglich als fiktives, virtuelles Kommunikationsnetz KN ausgebildet, dessen Informationsströme durch das erste Kommunikationsnetz KN₁ getunnelt werden, d.h. zwei Protokolle der gleichen Schicht werden derart miteinander verkapselt, dass die Daten des ersten Protokolls in die Datenpakete des zweiten Protokolls verpackt werden. Folgende Kommunikationsnetze KN sind mit Hilfe von als Netzübergangseinrichtungen GW ausgebildeten Kommunikationseinrichtungen KE miteinander verbunden: KN₁ mit KN₃, KN₁ mit KN₄, KN₄ mit KN₅, und KN₅ mit KN₆. Hierbei ist zwischen den Kommunikationsnetzen KN₁ und KN₃ eine erfindungsgemäß ausgebildete Netzübergangseinrichtung GW₁ und zwischen den Kommunikationsnetzen KN₁ und KN₄ eine erfindungsgemäß ausgebildete Netzübergangseinrichtung GW₂ vorgesehen. Die Netzübergangseinrichtungen GW weisen jeweils zumindest zwei Protokollstacks PS auf, die mit Hilfe eines Adapter PI miteinander verbunden sind.

Die Kommunikationsnetze KN₂ - KN₆ weisen beispielsweise Netzadressen A_{IP} auf, die entsprechend einem Internet-Protokoll IP ausgebildet sind. Folgende Adressräume seien vorgesehen:
- in Kommunikationsnetz KN₂: 128.xxx.xxx.xxx
- in Kommunikationsnetz KN₃: 128. 30. 30.xxx
- in Kommunikationsnetz KN₄: 128. 10. 10.xxx
- in Kommunikationsnetz KN₅: 128. 10. 4.xxx
- in Kommunikationsnetz KN₆: 128. 10. 6.xxx

In dem Kommunikationsnetz KN₁ erfolgt die Adressierung mit Netzadressen A_{OSI} entsprechend dem OSI-Protokoll CLNP, d.h. Netzadressen A_{OSI} mit einem Prefix P 0x31 (hexadezimal) = 49 (dezimal) enthalten einen Domain Specific Part DSP, der gemäß dem vorgeschriebenen Format F₁ frei belegt werden kann. Zudem sein dem Kommunikationsnetz KN₁ eine weitere Kommunikationseinrichtung KE zugeordnet mit einer Netzadresse A_{OSI} = 35 110 254 255 91, d.h. diese Netzadresse A_{OSI} enthält keinen als Authority and Format Identifier AFI ausgebildeten Prefix P.

Die Erfindung sei anhand des in Figur 4 dargestellten Netzszenarios beispielhaft ausgeführt. Hierbei werden den Netzübergangseinrichtung GW₁, GW₂ gemäß dem erfindungsgemäßen Verfahren Netzadressen A zugeordnet mit dem Ziel, eine Informationsübermittlung zwischen einem dem Kommunikationsnetz KN₃ mit Netzadresse A_{IP} = 128.30.30.5 zugeordneten Kommunikationseinrichtung KE_{A} und einem dem Kommunikationsnetz KN₆ mit Netzadresse A_{IP} = 128.10.6.2 zugeordneten Kommunikationseinrichtung KE_{B} durchführen zu können.

Infolge der Erfindung werden alleinig Netzadressen A_{IP} festgelegt, die ein Format F₂ entsprechend dem Internet-Protokoll IP aufweisen. Vorteilhaft ist somit keine Festlegung, d.h. Adressplanung, von Netzadressen A_{OSI} des ersten Formats F₁ erforderlich. Für die Netzübergangseinrichtung GW₁ wird für das fiktive Kommunikationsnetz KN₂ die Netzadresse A_{IP1} = 128.10.99.2 festgelegt und für das Kommunikationsnetz KN₄ die Netzadresse A_{IP2} = 128.10.10.1; für die Netzübergangseinrichtung GW₂ wird für das fiktive Kommunikationsnetz KN₂ die Netzadresse A_{IP1} = 128.30.77.2 festgelegt und für das Kommunikationsnetz KN₃ die Netzadresse A_{IP2} = 128.30.30.1. Alle festgelegten Netzadressen A_{IP} werden den jeweiligen Netzübergangseinrichtungen GW mitgeteilt.

Hieraus wird in der Netzübergangseinrichtung GW₁ durch Hinzufügen das als Authority and Format Identifier AFI ausgebildeten Prefix P mit dem Wert 0x31 erfindungsgemäß die Netzadresse A_{OSI} = 49-12810992 der Netzübergangseinrichtung GW₁ in dem Kommunikationsnetz KN₁ gebildet - siehe auch Figur 2. Auf gleiche Weise wird in der Netzübergangseinrichtung GW₂ deren Netzadresse A_{OSI} = 49-12830772 in dem Kommunikationsnetz KN₂ gebildet.

Infolge der konfliktfreien Adressvergabe der Internet-Netzadressen A_{IP} sind die beiden gebildeten OSI-Netzadressen A_{OSI} ebenfalls konfliktfrei. Auch mit der Netzadresse A_{OSI} = 35-11025425591 der weiteren dem Kommunikationsnetz KN₁ zugeordneten Kommunikationseinrichtung KE besteht infolge des unterschiedlichen Prefixes P kein Adresskonflikt.

Zudem werden in den Routing-Tabellen RT der beiden Netzübergangseinrichtung GW keine Einträge von OSI-Netzadressen A_{OSI} erforderlich. Somit können vorteilhaft bewährte Routing-Tabellen RT mit Internet-Netzadressen A_{IP} eingesetzt werden. Beispielsweise sind für obige Informationsübermittlung zwischen den beiden Kommunikationseinrichtungen KE_{A} und KE_{B} folgende Einträge in den Routing-Tabellen RT vorgesehen:

In der Netzübergangseinrichtung GW₁:

| ZIELADRESSE | NEXT HOP | LOCAL EXIT (GW₁) |
|---|---|---|
| 128.30.30.5 (KN₃ (**KE**_{**A**})) | 128.30.77.2 (KN₂ (GW₂)) | 128.10.99.2 (KN₂ (GW₁)) |
| 128.10.6.2 (KN₆ (**KE**_{**B**})) | 128.10.10.3 (KN₄) | 128.10.10.1 (KN₄ (GW₁)) |

und in der Netzübergangseinrichtung GW₂:

| ZIELADRESSE | NEXT HOP | LOCAL EXIT (GW₂) |
|---|---|---|
| 128.10.6.2 (KN₆ (**KE**_{**B**})) | 128.10.99.2 (KN₂ (GW₁)) | 128.30.77.2 (KN₂ (GW₁)) |
| | | |

Somit sind in beiden Routing-Tabellen lediglich Internet-Adressen A_{IP} vorgesehen, d.h. auf für das fiktive Kommunikationsnetz KN₂.

Eine Informationsübermittlung zwischen den beiden Kommunikationseinrichtung KE_{A} und KE_{B} erfolgt nun nach den entsprechend den im Internet üblichen Routing-Verfahren.

Abschließend sei darauf hingewiesen, dass die Erfindung in jedem beliebigen Typ von Kommunikationsnetz KN angewandt werden kann. Beispielsweise ist eine Anwendung vorgesehen in
- Weitverkehrs-Kommunikationsnetzen KN, wie z.B. dem Internet,
- lokalen Kommunikationsnetzen KN - auch 'Local Area Network' bzw. 'LAN' genannt,
- virtuellen Kommunikationsnetzen KN, wie z.B. einem Virtual Private Network - auch 'VPN' genannt - oder z.B. dem priorisierten Teilnetz eines DiffServ-Netzes.

## Patentansprüche

1. Verfahren zur Zuordnung einer Netzadresse (A) zu einer Kommunikationseinrichtung (KE) in einem Kommunikationsnetz (KN₁), in dem die zugeordneten Kommunikationseinrichtungen (KE) mit ein erstes Format (F₁) aufweisenden Netzadressen (A) adressiert werden, mit folgenden Schritten:
- es wird eine ein von dem ersten Format (F₁) unterschiedliches zweites Format (F₂) aufweisende Netzadresse (A_{IP1}) festgelegt,
- unter Berücksichtigung dieser Netzadresse (A_{IP1}) wird eine an das erste Format (F₁) angepasste Netzadresse (A_{OSI}) gebildet,
- der Kommunikationseinrichtung (KE) wird die angepasste Netzadresse (A_{OSI}) zu deren Adressierung in dem Kommunikationsnetz (KN₁) zugeordnet.

2. Verfahren nach Anspruch 1,
**dadurch gekennzeichnet,**
**dass** bei einer als Netzübergangseinrichtung (GW) zu einem weiteren Kommunikationsnetz (KN₂), in dem die zugeordneten Kommunikationseinrichtungen (KE) mit das zweite Format (F₃) aufweisenden Netzadressen (A) adressiert werden, ausgebildeten Kommunikationseinrichtung (KE) eine weitere, das zweite Format aufweisende Netzadresse (A_{IP2}) festgelegt und der Netzübergangseinrichtung (GW) zu deren Adressierung in dem weiteren Kommunikationsnetz (KN₂) zugeordnet wird.

3. Verfahren nach einem der Ansprüche 1 oder 2,
**dadurch gekennzeichnet,**
**dass** die angepasste Netzadresse (A_{OSI}) die festgelegte Netzadresse (A_{IP1}) unverändert enthält.

4. Verfahren nach einem der Ansprüche 1 bis 3,
**dadurch gekennzeichnet,**
**dass** die angepasste Netzadresse (A_{OSI}) durch Hinzufügen eines Prefixes (P) zu der festgelegten Netzadresse (A_{IP1}) gebildet wird.

5. Verfahren nach einem der vorhergehenden Ansprüche,
**dadurch gekennzeichnet**,
dass in dem ersten Kommunikationsnetz (KN₁) entsprechend den Vorschriften eines OSI-Protokolls (OSI) adressiert wird.

6. Verfahren nach den Ansprüchen 4 und 5,
**dadurch gekennzeichnet,**
**dass** bei Ausbildung des OSI-Protokolls (OSI) als Connection Less Network Protocol (CLNP) die angepasste Netzadresse (A_{OSI}) gebildet wird, indem für einen als Authority And Format Identifier (AFI) ausgebildeten Prefix (P) ein hexadezimaler Wert 0x31 vergeben und die festgelegte Netzadresse (A_{IP1}) in einen nachfolgenden Domain Specific Part (DSP) eingefügt wird.

7. Verfahren nach einem der vorhergehenden Ansprüche,
**dadurch gekennzeichnet,**
**dass** das zweite Format (F₂) als ein Format (F) zur Bildung von Internet-Adressen (A_{IP}) ausgebildet ist.

8. Verfahren nach einem der vorhergehenden Ansprüche,
**dadurch gekennzeichnet,**
**dass** in dem zweiten Kommunikationsnetz (KN₂) entsprechend den Vorschriften eines IP-Protokolls (IP) adressiert wird.

9. Anordnung zur Durchführung eines Verfahrens nach einem der vorhergehenden Ansprüche.

10. Kommunikationseinrichtung (KE) mit:
- zumindest einem ersten Protokollstack (PS₁) zur Anbindung der Kommunikationseinrichtung (KE) an ein erstes Kommunikationsnetz (KN₁), dessen zugeordnete Kommunikationseinrichtungen (KE) mit ein erstes Format (F₁) aufweisenden Netzadressen (A) adressiert werden,
- zumindest einem zweiten Protokollstack (PS₂) zur virtuellen Anbindung der Kommunikationseinrichtung (KE) an ein zweites Kommunikationsnetz (KN₂), dessen zugeordnete Kommunikationseinrichtungen (KE) mit ein zweites Format (F₂) aufweisenden Netzadressen (A) adressiert werden,
- zumindest einem Adapter (PI) zur Verbindung der beiden Protokollstacks (PS₁, PS₂), von dem in jede Richtung zumindest die übermittelten Netzadressen (A) jeweils derart angepasst werden, dass diese anschließend dem Format (F) der Netzadressen (A) desjenigen Kommunikationsnetzes (KN) entsprechen, für das der jeweils empfangende Protokollstack (PS) ausgebildet ist.
